# EUROPÄISCHE PATENTANMELDUNG

(11) **EP 1 585 046 A1**
(43) Veröffentlichungstag der Anmeldung: **12.10.2005**
(21) Anmeldenummer: 05006848.5
(22) Anmeldetag: 30.03.2005
(51) Int. Cl.: G06F 17/60

(54) **Hafenbetriebsleit- und Informationseinrichtung und Verfahren zum Betrieb einer solchen**

(30) Priorität: 05.04.2004 AT 5942004
(71) Anmelder: Tauber, Anton, 4575 Rossleithen (AT); Schneider, Gerhard, 2492 Eggendorf (AT)
(72) Erfinder: Tauber, Anton, 4575 Rossleithen (AT); Schneider, Gerhard, 2492 Eggendorf (AT)
(74) Vertreter: Secklehner, Günter

(57) **Zusammenfassung**

Die Erfindung betrifft eine Hafenbetriebsleit- und Informationseinrichtung (1) sowie ein Verfahren zum Betrieb einer solchen für einen Hafenbereich, insbesondere einen Yachthafen (2), mit einer zentralen Betriebsleitvorrichtung (3), wobei mehrere der mit der Betriebsleitvorrichtung (3) ausgestattete Yachthäfen (2) über einen Rechner (9) der Betriebsleitvorrichtungen (3) in einem Verbund mit einem Leitrechner (6) angeordnet sind und jeder Rechner (9) mit zumindest einer vom Rechner (9) distanzierten Kommunikationsvorrichtung (4) verbunden ist und mit dem Rechner (9) eine mit Sende- und Empfangsmitteln (14) versehene Erfassungs- und Auswerteeinrichtung (13) für Identifikations- und Positionsdaten von Yachten kommunikationsverbunden ist.

## Beschreibung

Die Erfindung betrifft eine Hafenbetriebsleit- und Informationseinrichtung, wie im Oberbegriff des Anspruches 1 beschrieben, sowie ein Verfahren zum Betrieb einer solchen, wie im Oberbegriff des Anspruches 14 angegeben.

Aus dem Dokument DE 40 33 829 C2 ist eine Dienstleistungs- Informationseinrichtung mit einer Dienstleistungsdaten- Speichereinrichtung zum Speichern verschiedenartiger Gruppen von Dienstleistungsdaten bekannt, bei der die Gruppen Dienstleistungsbetrieben entsprechen, die jeweils Landkartendaten spezieller geografischer Bereiche zugeordnet sind und mittels einer Auswähleinrichtung wählbar sind und die weiter eine Steuer- und Anzeigeeinrichtung umfasst zum Ablesen und überlagerten Anzeigen von in Frage kommender Dienstleistungsbetriebe auf der Grundlage der speziellen Gruppe von Dienstleistungsdaten als auch der Karte des speziellen geografischen Bereiches infolge eines Signals aus der Auswähleinrichtung.

Aufgabe der Erfindung ist es eine Hafenbetriebsleit- und Informationseinrichtung zu schaffen mit der eine hohe Auslastung von Dienstleistungen in einem Hafenbereich erreicht wird und ein Nutzer unabhängig von einem Abfragestandort aktuelle Informationen über das aktuelle Dienstleistungsangebot einholen und gegebenenfalls Reservierungen vornehmen zu können.

Diese Aufgabe der Erfindung wird durch die im Anspruch 1 wiedergegebenen Merkmalen erreicht. Der überraschende Vorteil dabei ist, dass damit ein Zugriff zur Informationsbeschaffung über eine zentrale Betriebsleitvorrichtung auf sämtliche mit dieser in Kommunikationsverbindung angeordneten externen Bereiche erreicht wird und durch die Erfassung aktueller Yachtbewegungen eine kurzfristige Belegungssteuerung von Liegeplätzen erreicht wird und damit die vorhandenen Kapazitäten einen hohen Nutzungsgrad erreichen.

Von Vorteil ist aber auch eine Ausbildung nach Anspruch 2 weil dadurch unabhängig von einer zentralen Position im Hafenbereich eine den individuellen Anforderungen entsprechende Dienstleistungsabwicklung erreicht wird.

Möglich ist aber auch eine Ausbildung nach Anspruch 3, wodurch Engpässe bei der Zuordnung von Betriebsmitteln vermieden werden und eine hohe Umschlagleistung erreicht wird.

Gemäß der im Anspruch 4 wiedergegebenen vorteilhaften Ausbildung werden Kommunikationsfehler vermieden und kurze Reaktionszeiten für die Abwicklung der Zuteilung von Dienstleistungen erreicht.

Möglich ist dabei eine Ausbildung wie im Anspruch 5 beschrieben, weil dadurch eine eindeutige, verwechslungsfreie Abwicklung erreicht wird.

Durch die im Anspruch 6 gekennzeichnete Lösung wird eine zentrale Auswertung erreicht, wodurch eine Mehrfachbelegung von Leistungen vermieden wird.

Vorteilhaft ist aber auch eine Ausbildung nach Anspruch 7 wodurch eine enge zeitliche Übersicht gegeben ist und Zuteilungsfehler vermieden werden.

Die im Anspruch 8 beschriebene vorteilhafte Ausbildung ermöglicht eine einfache und für den Nutzer bedienfreundliche Inanspruchnahme von Dienstleistungen und gewährleistet darüber hinaus dem Betreiber einen geringen Kontrollaufwand.

Gemäß den in den Ansprüchen 9 und 10 beschriebenen vorteilhaften Weiterbildungen wird die Abgabe der Betriebsmittel sowie deren Bewertung und Bestandsführung vereinfacht.

In den Ansprüchen 11 und 12 sind weitere vorteilhafte Ausbildungen gekennzeichnet, wodurch bestehende Leitungssysteme genutzt werden oder aber eine Variante zur Vermeidung aufwendiger Verlegearbeiten für ein Leitungssystem zur Anwendung gebracht werden kann.

Schließlich gewährleistet eine Ausbildung wie im Anspruch 13 gekennzeichnet einen Zugriff auf die für einen Nutzer für eine Reiseplanung oder auch während einer Reise wichtigen Informationen über Yachthäfen, deren Dienstleistungen und Kapazitäten, wodurch ein störungsfreier Ablauf derartiger Aktivitäten gewährleistet ist.

Aufgabe der Erfindung ist es aber auch Maßnahmen für den Betrieb einer Hafenbetriebsleiteinrichtung anzugeben gemäß diesen eine hohe Effizienz aller Kapazitäten bei geringem Aufwand an Leitung, Planung und Kontrolle erreicht wird.

Diese Aufgabe der Erfindung wird durch die im Anspruch 14 wiedergegebenen Maßnahmen erreicht. Der Vorteil darnach ist, dass damit ein hoher Auslastungsgrad und damit eine hohe Wirtschaftlichkeit der Einrichtungen erreicht wird.

Vorteilhaft sind dabei auch Maßnahmen nach den Ansprüchen 15 und 16 weil dadurch ein geringer personeller Einsatz bei qualitativ hochwertiger und fehlerfreier Leistung erreicht wird.

Zum besseren Verständnis wird die Erfindung anhand der in den Figuren gezeigten Ausführungsbeispielen näher erläutert.

Es zeigen:
- Fig. 1: ein Blockschema der erfindungsgemäßen Hafenbetriebsleit- und Informationseinrichtung;
- Fig. 2: eine Erfassungs- und Auswerteeinrichtung der erfindungsgemäßen Hafenbetriebsleit- und Informationseinrichtung;
- Fig. 3: einen Yachthafen in vereinfachter Darstellung.

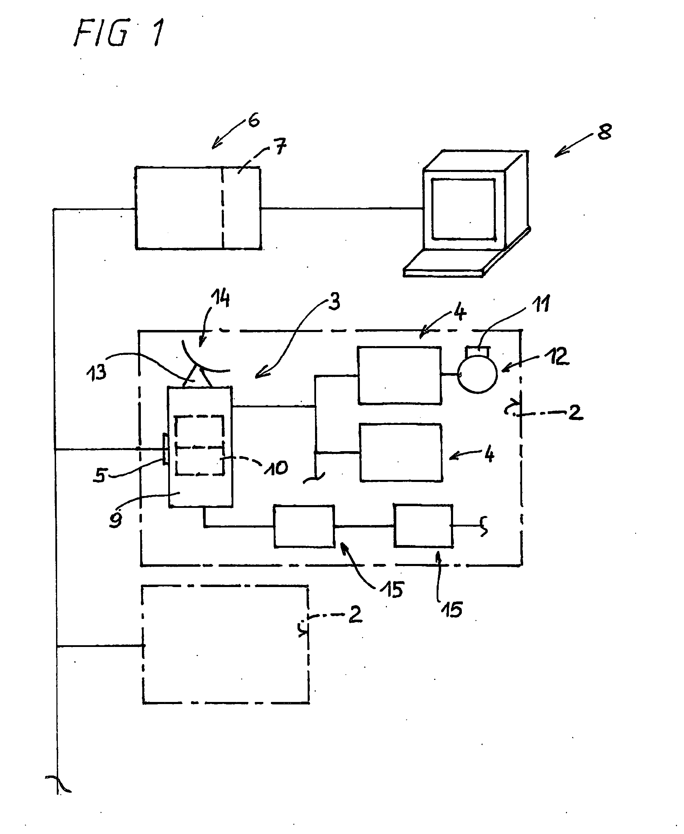

In der Fig. 1 ist in einem vereinfachten Blockschema eine Hafenbetriebsleit- und Informationseinrichtung 1 eines Hafenbereiches insbesondere eines Yachthafens 2 für Motor- und/oder Segelyachten gezeigt. In einem derartigen Hafenbereich sind einerseits eine Reihe offizieller, amtlicher und organisatorischer Maßnahmen für den Betrieb zu erfüllen und andererseits ist es für einen Benutzer von Bedeutung rund um die Uhr zu allen für ihn relevanten Informationen über den konkreten Hafenbereich und/oder über in Kommunikationsverbindung stehender weiterer Yachthäfen (2) ohne örtlicher Gebundenheit Zugang zu finden und die amtlichen Maßnahmen die mit An- und Abmeldungen verbunden sind vor Ort selbstständig durchzuführen, wie weiter auch aus den angebotenen Dienstleistungen auszuwählen, zu ordern und durch über Verrechnung in Anspruch zu nehmen.

Die Hafenbetriebsleit- und Informationseinrichtung 1 weist dazu zumindest eine zentrale Betriebsleitvorrichtung 3 und zumindest eine dezentrale, mit der Betriebsleitvorrichtung 3 in Kommunikationsverbindung, z.B. über Leitung oder drahtlos, in Verbindung stehende Kommunikationsvorrichtung 4 auf. Bevorzugt ist die Betriebsleitvorrichtung 3 über eine Internetschnittstelle 5 mit einem übergeordneten Leitrechner(Server) 6 kommunikationsverbunden an dem eine Anzahl weiterer Yachthäfen (2) einer vorgegebenen Region oder eines Landes oder eines Meeresbereiches oder eines See zu einem Verbund vemetzt sind. Am Großrechner ist eine Internett- Plattform 7 für den Zugriff externer Nutzer über Personalcomputer 8 installiert, die damit auch Zugang zu sämtlichen in einem Verbund mit dem Leitrechner 6 vernetzten Yachthäfen (2) haben.

Örtlich ist die Betriebsleitvorrichtung 3 bevorzugt in einem Hafenbüro situiert und damit im unmittelbaren Befugnisbereich der mit der Leitung und Betriebsführung beauftragten Personen. Die Betriebsleitvorrichtung 3 wird in einer Grundkonfiguration zumindest durch einen Rechner 9 mit Datenspeicher 10, Ein- und/oder Ausgabemitteln 11 für Informationen und Daten, z.B. Bildwiedergabegerät, Tastatur, Belegleser, Telefon, Fax, gebildet und weist bevorzugt auch eine Wertausgabe- u/o Werterfassungsvorrichtung 12 auf.

An die Betriebsleitvorrichtung 3 ist nach der erfindungsgemäßen Ausführung weiter eine Erfassungs- und Auswerteeinrichtung 13 für Identifikationsdaten und Positionskoordinaten von Yachten in einem vorbestimmten Umkreis des Yachthafens 2 angeschlossen. Diese weist Sende- und Empfangsmittel 14 für Satellitensignale auf.

An der Betriebsleitvorrichtung 3 ist, bzw. sind, über ein Kommunikationsmittel, z.B. Verbindungsleitung, Funkeinrichtung, die, bevorzugt allerdings für den Yachthafen 2 mehrere der allgemein zugänglichen Kommunikationsvorrichtungen 4 und weiters auch Versorgungseinrichtungen 15 angeschlossen.

Bevorzugte Standorte für die Kommunikationsvorrichtungen 4 sind in einem "rund um die Uhr" zugänglichen Checkpoint im Nahebereich des Hafenamtes, sowie einer Seezufahrt, Landzufahrt, wie weiter bedarfsgerecht bei oder in Dienstleistungsbereichen z.B. Restaurant/Kaffee, Kino, Hygienebereich, Sport- und Spielanlagen etc. und an markanten Punkten des Hafengeländes.

Die Kommunikationsvorrichtung 4 umfasst erfindungsgemäß die Ein- und/oder Ausgabemitteln 11 für Informationen und Daten, zumindest jedoch ein Bildwiedergabegerät - bevorzugt einen so genannten "touch screen", ein Telefon, und bevorzugt einen Belegleser und die Wertausgabe- und/oder Werterfassungsvorrichtung 12.

Die Versorgungseinrichtungen 15 sind insbesondere den Bereichen der Liegeplätze der Yachten und unmittelbaren Dienstleistungsbereichen wie Servicebereiche für Betankung, Wasseraufnahme, Stromversorgung, Reparatur und Wartung, Kran- und Slipanlage zugeordnet und mit der Betriebsleitvorrichtung 3 über Leitungen oder Funk kommunikationsverbunden.

Deren Ausstattung besteht im wesentlichen aus einer mit dem Rechner 9 der Hafenbetriebsleitvorrichtung 3 kommunikationsverbundenen Steuer- und Regeleinrichtung 16, und weist weiter auch die Wertausgabe- und/oder Werterfassungsvorrichtung 12 auf, sowie mit der Steuer- und Regeleinrichtung 16 leitungsverbundene Schaltmittel zur Freigabe von Versorgungsleitungen für die Abgabe von Betriebsmitteln oder Energie, z.B. Treibstoff, Wasser, Strom etc.

Die Wertausgabe- und/oder Werterfassungsvorrichtung 12 ist als bargeldloses Abrechnungssystem in verschiedenen Varianten, z.B. mit einer Wertkarte, in einer Vielzahl technischer Ausbildungen bekannt und Stand der Technik. Es wird die Verrechnung von Leistungen durch Zu- und Abbuchung von Geldwerten in und aus einem elektronischen und codierten Speicher, der in oder auf einem Trägermittel, z.B. Karte, Armband, Anhänger etc., angeordnet ist, erreicht.

In einer für die konkrete Anwendung bevorzugten Ausführung wird insbesondere ein seefähiges Trägermittel verwendet und erfolgt der Datenaustausch mit der Wertausgabe- und/oder Werterfassungsvorrichtung 12 kontaktlos. Die Verbindung mit der Betriebsleitvorrichtung 3 kann selbstverständlich über Leitungen wie auch drahtlos über Funk z.B. einem LAN- Netz erfolgen.

Die Erfassungs- und Auswerteeinrichtung 13 der Betriebsleitvorrichtung 3, für die Identifikation von Yachten und deren Positionskoordinaten in einem vorgegebenen Umkreis vom Yachthafen 2, dient der Optimierung der Belegung von Liegeplätzen und zwar derart, dass vorübergehend nicht belegte auf Dauer oder bestimmte Zeit vergebene Liegeplätze, so genannte Dauerliegeplätze, kurzfristig als Transitliegeplätze bei Bedarf vergeben werden können, wie dies im Detail noch an späterer Stelle ausführlich beschrieben wird.

An Hand der nachfolgend beschriebenen Beispiele wird die erfindungsgemäße Hafenbetriebsleiteinrichtung 1 mit der Betriebsleitvorrichtung 3 und mit zumindest einer der Kommunikationsvorrichtungen 4 und einer Versorgungseinrichtung 15 erläutert.

### Beispiel 1: Reiseplanung

1 Aufruf Internet- Plattform z.B. "MARINA.XXX.XX";
   1.1 Auswahl Sprache;
   1.2 Auswahl
      a) Meeres- oder Binnenseehafen;
      b) geografischer Bereich;
      c) Name Yachthafen;
   1.3 Auswahl Hafenkarte;
   1.4 Auswahl Dienstleistungsbereiche;
   1.5 Auswahl Umgebungskarte;
   1.6 Auswahl
      a) Liegeplatzplan
      b) Liegeplatzbelegung/Kapazitäten;
   1.7 Auswahl Preise;
   1.8 Auswahl Hafenordnung;
2 Auswahl Buchungs- und Bezahlprozedere, Anforderung von Berechtigung z.B. Wert- karte etc.;
3 Auswahl Reservierungsbestätigung;
4 Auswahl Tourenplanung.

Die beschriebene Reihung der Abfragen ist nur beispielshaft gewählt und kann nach individuellen Vorstellungen gestaltet werden.

Weiter ist zu erwähnen, dass das Angebot an abrufbaren Informationen und Dienstleistungen jederzeit und nach Bedarf erweiterbar ist, z.B. Wetterbericht, Wettervorhersagen, aktuelle Veranstaltungen, Chartermöglichkeit u.v.m.

### Beispiel 2: Ankunft/Aufenthalt/Abreise - Schiffsreisender

Einfahrt über Land:
   2.1 Zufahrtssperre, Parkticket, oder bereits vorhandene Wertkarte;
      (weiter Pkt. 2.2)
Einfahrt über See:
   2.2 Registrierungsvornahme, Hafenbüro oder Kommunikationsvorrichtung 4;
   2.3 Berechtigung z.B. Ausgabe der Wertkarte;
   2.4 Einscannen Schiffspapier;
   2.5 Einscannen Kapitänspatent;
   2.6 Einscannen Crewliste;
   2.7 Ausweisregistrierung - Personalien;
   2.8 Registrierung von Leistungen auf Wertkarte;
   2.9 Parkplatz - und/oder Liegeplatzzuteilung;
   2.10 Dienstleistungsreservierung;
   2.11 Abmeldung - Endkontrolle Abrechnung.

### Beispiel 3: Liegeplatzbelegung - Transitliegeplatz ohne Vorregistrierung.

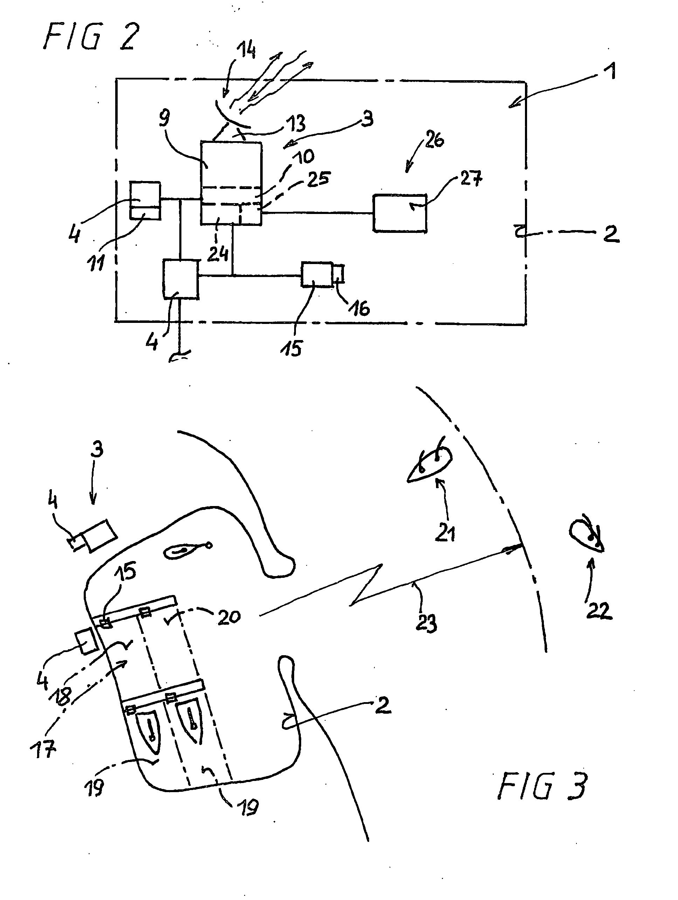

An Hand der in den Fig. 2 und 3 gezeigten, an den Rechner 9 der Betriebsleitvorrichtung 3 angeschlossenen Erfassungs- und Auswerteeinrichtung 13, ist das Verfahren zur Zuteilung eines Liegeplatzes 17, für eine auf dem Landweg oder über See, ohne einer bereits erfolgten Buchung bzw. Registrierung, ankommenden Yacht, beschrieben.

Der Bedarf wird unter Angabe der Erfordernisse z.B. Schiffsgröße, Liegeplatzart, Zeitdauer, z.B. durch persönliche Eingabe an der Kommunikationsvorrichtung 4 nach dem Einlangen oder unmittelbar vor einer Ankunft über Internett, Funk, Telefon, Fax, avisiert und werden die Daten an den Rechner 9 über die Eingabe am Ein- und Ausgabemittel 11 ,oder über die Internettschnittstelle 5 übermittelt worauf die im Datenspeicher 10 enthaltenen Informationen zur Belegung nach einem geeigneten, zur Verfügung stehenden Liegeplatz 17 überprüft werden.

Im gezeigten und beschriebenen Ausführungsbeispiel ist beispielsweise kein freier, für einen kurzzeitigen Aufenthalt vorgesehener Transitliegeplatz 19 verfügbar. Im Datenbestand des Datenspeichers 10 werden jedoch zwei, den Anforderungen entsprechende, freie Dauerliegeplätze 18, 20 ermittelt.

Die Überprüfung inwieweit nun für den vorübergehenden und zeitlich defmierten Bedarf der bzw. einer der Dauerliegeplätze 18, 20 für den Transitbedarf zur Verfügung gestellt werden kann erfolgt nun durch die dem Rechner 9 zugeordnete Erfassungs- und Auswerteeinrichtung 13 für Identifikationsdaten sowie Positionskoordinaten der für die freien Dauerliegeplätze 18, 20 registrierten Yachten 21, 22 denen mit der Registrierung der Dauerliegeplätze 18, 20 jeweils ein Identifikationscode, z.B. ein mehrstelliger PIN- Code, zugeteilt wird.

Über die Sende- und Empfangsmittel 14 der Erfassungs- und Auswerteeinrichtung 13 für Satellitensignale wird in einem Umkreis, z.B. mit einem Radius 23 von 40 Meilen um die Positionskoordinaten des Yachthafens 2, die mögliche Anwesenheit und die Positionskoordinaten einer oder beider für die Dauerliegeplätze 18, 20 registrierten Yachten 21, 22 mittels Positionserfassung über Satellit z.B. GPS, mit Erfassung des Identifikationscodes, PIN Code, überprüft und im Falle eines positiven Ergebnisses ausgewertet.

Die Auswertung erfolgt in einer dem Rechner 9 zugeordneten Rechenvorrichtung 24 und einer hinterlegten Datenmatrix 25 und liegen der Auswertung die ermittelten Positionskoordinaten bzw. ein voraussichtlicher Kursverlauf gemäß mehrerer in Zeitabständen ermittelten Positionskoordinaten und der daraus ermittelten Fahrt der Yacht zu Grunde , sowie als variable, und in der Datenmatrix 25 berücksichtige Faktoren wie Windrichtung, Windgeschwindigkeit, Strömung in die Berechnung eingehen.

Dabei wird, wie beispielsweise gezeigt, die Annäherung und das zu erwartende und bevorstehende Einlaufen der, für einen der freien Dauerliegeplätze 18, 20 registrierten Yacht 21 festgestellt, wogegen die für den weiteren Dauerliegeplatz registrierte Yacht 22 nicht im Überwachungsbereich festgestellt wird. Damit kann der für die Yacht 22 registrierte Dauerliegeplatz für eine vorübergehende Transitbelegung frei gegeben werden ohne mit der Yacht 22 eine direkte Verbindung aufnehmen zu müssen. Für die Darstellung der für die Beurteilung ermittelten Daten ist wie noch der Fig. 2 zu entnehmen in der Betriebsleitvorrichtung 3 bevorzugt mit dem Rechner 9 bzw. der Erfassungs- und Auswerteeinrichtung 13 für einen Datenaustausch verbunden ein Anzeigemittel 26, z.B. eine, eine Hafenkarte wiedergebende, elektronisch zur Auswertung von Daten ansteuerbare Bildfläche 27 z.B. Flüssigkristallanzeige vorgesehen auf der in Realzeit der IST- Zustand z.B. für die Belegung der Liegeplätze und/oder der Dienstleistungen ersichtlich ist.

### Bezugszeichenaufstellung

- 1: Hafenbetriebsleit- und Informationseinrichtung
- 2: Yachthafen
- 3: Betriebsleitvorrichtung
- 4: Kommunikationsvorrichtung
- 5: Internetschnittstelle

- 6: Leitrechner
- 7: Internet- Plattform
- 8: Personalcomputer
- 9: Rechner
- 10: Datenspeicher

- 11: Ein- und/oder Ausgabemittel
- 12: Wertausgabe- und/oder Werterfassungsvorrichtung
- 13: Erfassungs- und Auswerteeinrichtung
- 14: Sende- und Empfangsmittel
- 15: Versorgungseinrichtung

- 16: Steuer- und Regeleinrichtung
- 17: Liegeplatz
- 18: Dauerliegeplatz
- 19: Transitliegeplatz
- 20: Dauerliegeplatz

- 21: Yacht
- 22: Yacht
- 23: Radius
- 24: Rechenvorrichtung
- 25: Datenmatrix

- 26: Anzeigemittel
- 27: Bildfläche

## Patentansprüche

1. Hafenbetriebsleit- und Informationseinrichtung (1) für einen Hafenbereich eines Schiffshafen, insbesondere Yachthafen (2) für Motor- und/oder Segelyachten mit einer zentralen Betriebsleitvorrichtung (3) mit einem Rechner (9) und mit einer Ein- und Ausgabevorrichtung (11), z.B. Bildschirm, Tastatur, Telefon, Fax, Erfassungsvorrichtung für Dokumente, Wertausgabe- und Werterfassungsvorrichtung (12) und mit einem Datenspeicher (10) für Informationen und Daten des Hafenbereiches und/oder einem Regional- und/oder einem Überregionalbereich und/oder zumindest eines weiteren Yachthafens (2) und mit im Yachthafen (2) angeordneten Transitliegeplätze (18) und/oder Dauerliegeplätze (19) für Yachten (21, 22) an Stegen- und/oder Bojen und/oder Trockenliegeplätzen, **dadurch gekennzeichnet, dass** mehrere mit der Betriebsleitvorrichtung (3) ausgestattete Yachthäfen (2) über den jeweiligen Rechner (9) in einem Verbund mit einem Leitrechner (6) angeordnet sind und jeder Rechner (9) mit zumindest einer vom Rechner (9) distanzierten Kommunikationsvorrichtung (4) verbunden ist und mit dem Rechner (9) eine mit Sende- und Empfangsmitteln (14) versehene Erfassungs- und Auswerteeinrichtung (13) für Identifikations- und Positionsdaten von Yachten (21, 22) kommunikationsverbunden ist.

2. Hafenbetriebsleit- und Informationseinrichtung nach Anspruch 1, **dadurch gekennzeichnet, dass** die Kommunikationsvorrichtung (4) Ein- und/oder Ausgabemittel (11), z. B. Bildschirm, Tastatur, Telefon und bevorzugt eine Belegerfassungsvorrichtung und eine Wertausgabe- und/oder Werterfassungsvorrichtung (12) aufweist.

3. Hafenbetriebsleit- und Informationseinrichtung nach Anspruch 1, **dadurch gekennzeichnet, dass** mit dem Rechner (9), bevorzugt im Bereich der Liegeplätze (17) angeordnete, mit Anschlussmitteln für Leitungen versehene Versorgungseinrichtungen (15), für die Abgabe von Betriebsmitteln und/oder Energie, z.B. Treibstoff, Wasser, Strom, für die Yachten vorgesehen sind.

4. Hafenbetriebsleit- und Informationseinrichtung nach Anspruch 1, **dadurch gekennzeichnet, dass** die Erfassungs- und Auswerteeinrichtung (13) bzw. das Sende- und Empfangsmittel (14) für Satellitenkommunikation ausgebildet ist.

5. Hafenbetriebsleit- und Informationseinrichtung nach einem der vorhergehenden Ansprüche, **dadurch gekennzeichnet, dass** in der Erfassungs- und Auswerteeinrichtung (13) eine Code- Erfassungsvorrichtung angeordnet ist.

6. Hafenbetriebsleit- und Informationseinrichtung nach einem der vorhergehenden Ansprüche, **dadurch gekennzeichnet, dass** die Erfassungs- und Auswerteeinrichtung (13) mit dem Rechner (9) kommunikationsverbunden ist.

7. Hafenbetriebsleit- und Informationseinrichtung nach einem der vorhergehenden Ansprüche, **dadurch gekennzeichnet, dass** im Rechner (9) eine Rechenvorrichtung (24) für Kurs- und/oder Zeitbedarfsberechnung aus Positionskoordinaten von Yachten angeordnet ist.

8. Hafenbetriebsleit- und Informationseinrichtung nach einem der vorhergehenden Ansprüche, **dadurch gekennzeichnet, dass** die Wertausgabe- und Werterfassungsvorrichtung (12) mit einer Energie- und Datenübertragungsvorrichtung für einen drahtlosen Energie- und Datentransfer mit einem Speicher z.B. elektronischem Chip eines Datenträgers z.B. Wertkarte, Armband oder Anhänger versehen ist.

9. Hafenbetriebsleit- und Informationseinrichtung nach einem der vorhergehenden Ansprüche, **dadurch gekennzeichnet, dass** in der Versorgungseinrichtung (15) für die Betätigung von Regelmitteln z.B. Schalter, Ventile eine Steuer- und Regeleinrichtung (16) angeordnet ist.

10. Hafenbetriebsleit- und Informationseinrichtung nach Anspruch 9, **dadurch gekennzeichnet, dass** die Steuer- und Regeleinrichtung (16) mit der Wertausgabe- und/oder Werterfassungsvorrichtung (12) versehen ist.

11. Hafenbetriebsleit- und Informationseinrichtung nach einem der vorhergehenden Ansprüche, **dadurch gekennzeichnet, dass** die Betriebsleitvorrichtung (3) mit der Kommunikationsvorrichtung (4) über eine Leitung verbunden ist.

12. Hafenbetriebsleit- und Informationseinrichtung nach einem der vorhergehenden Ansprüche, **dadurch gekennzeichnet, dass** in der Betriebsleitvorrichtung (3) und in der Kommunikationsvorrichtung (4) Sende- und Empfangsmittel als Kommunikationsmittel für die drahtlose Signal - u/o Datenübertragung angeordnet sind.

13. Hafenbetriebsleit- und Informationseinrichtung nach Anspruch 1, **dadurch gekennzeichnet, dass** am Leitrechner (6) eine Internet- Plattform (7) für einen Datenaustausch für Information und/oder Kommunikation installiert ist.

14. Verfahren zum Betrieb einer Hafenbetriebsleit- und Informationseinrichtung nach Anspruch 1, **dadurch gekennzeichnet, dass** über die mit dem Rechner (9) der Betriebsleitvorrichtung (3) verbundene Erfassungs- und Auswertevorrichtung (13) mit den Sende- und Empfangsmitteln (14), insbesondere für eine Satellitenkommunikation, Identifikations- und/oder Positionsdaten von Yachten (21, 22) in einem vorgegebenen Umkreis zum Yachthafen (2) abgerufen werden, wonach von einer Rechenvorrichtung (24) des Rechners (9) auf die im Datenspeicher (10) des Rechners (9) hinterlegten Datenmatrix (25) zugegriffen wird und unter Heranziehung der Identifikations- und/oder Positionsdaten eine Liegeplatz (17) Bestands- und/oder Verfügbarkeitsdatei generiert wird.

15. Verfahren nach Anspruch 14, **dadurch gekennzeichnet, dass** in der Rechenvorrichtung (24) aus Positionsdaten für die nach den Identifikationscode identifizierten Yachten (21, 22) und von in der Datenmatrix hinterlegten veränderlichen Parametern, z.B. Fahrt (Geschwindigkeit), Windstärke, Windrichtung, Strömung etc., der Kursverlauf der Yacht (21, 22) und Fahrtdauer und damit der voraussichtliche Einlaufzeitpunkt in den Yachthafen (2) ermittelt und auf dem Ein- und Ausgabemittel (11) bzw. einem Anzeigemittel (26) als Information ausgegeben wird.

16. Verfahren nach Anspruch 14 oder 15, **dadurch gekennzeichnet, dass** nach Eingang eines Reservierungsanforderung für einen Liegeplatz (17) und/oder einer Dienstleistung die Bestands- und/oder Verfügbarkeitsdatei aktualisiert wird.
